Europäisches Patentamt

(19) European Patent Office

Office européen des brevets

(11) Numéro de publication: **0 004 688**
A2

(12)·

# DEMANDE DE BREVET EUROPEEN

(21) Numéro de dépôt: 79200149.7

(22) Date de dépôt: 28.03.79

(51) Int. Cl.²: **G 01 N 1/12**
**C 21 C 5/00**

(30) Priorité: 30.03.78 FR 7809327

(43) Date de publication de la demande:
17.10.79 Bulletin 79/21

(84) Etats Contractants Désignés:
BE CH DE GB IT LU NL SE

(71) Demandeur: ELECTRO-NITE N.V.
Grote Baan 27a
B-3530 Houthalen(BE)

(72) Inventeur: Cure, Omer Paul Ivo
Havenlaan 8
B-3610 Diepenbeek(BE)

(74) Mandataire: Bockstael, Marius Florimond Jean et al,
Arenbergstraat 13
B-2000 Anvers(BE)

(54) Event-obturateur pour dispositif de prise d'échantillon de métal en fusion.

(57) L'invention concerne un évent-obturateur pour dispositif de prise d'échantillon de métal en fusion, dispositif du type comportant un moule présentant un passage d'entrée donnant accès à au moins une chambre, communiquant avec l'extérieur du moule.

Il se caractérise en ce qu'il est constitué par une barrière (10) logée dans ladite chambre (7), cette barrière étant conformée pour offrir, d'une part, une pluralité de passages pour l'air lors du remplissage du dispositif par du métal en fusion et, d'autre part, une masse et une surface suffisantes pour garantir le refroidissement jusqu'à solidification du métal atteignant ladite barrière.

L'invention est applicable dans le domaine de la métallurgie.

Fig.1

0004688

- 1 -

<u>"Event-obturateur pour dispositif de prise d'échantillon de métal en fusion"</u>.

La présente invention concerne un évent-obturateur pour dispositif de prise d'échantillon de métal en fusion.

Il est usuel, en métallurgie, de prélever des échantillons de bains de métaux en fusion, aux fins d'analyses. Pour ce faire, on utilise le plus souvent des dispositifs de prélèvement à usage unique, du type substantiellement constitué par un moule à fixer temporairement en bout d'une lance creuse.

Le moule comporte un passage d'entrée se prolongeant par une chambre, elle-même prolongée dans certains cas par une ou plusieurs chambres ou passages cylindriques. Un ou plusieurs évents sont prévus pour permettre l'échappement de l'air au travers de la susdite lance, lors de l'immersion du moule et de son remplissage.

La chambre est conformée pour fournir un échantillon en forme de plaquette, tandis que le ou les passages cylindriques permettent d'obtenir des tiges ou éprouvettes. Il est évidemment nécessaire, entre autres, que le moule se remplisse de façon complète afin d'obtenir un échantillon adéquat. Ceci implique qu'il est difficile d'éviter un surremplissage, c'est-à-dire que le métal ne franchisse le où les évents, d'autant plus que le dispositif doit souvent être immergé à

0004688

une profondeur non négligeable.

Un tel surremplissage donne des difficultés au démoulage et cause des pertes de temps lors de la préparation de l'échantillon.

Pour pallier ce désavantage, on a déjà proposé de réaliser des évents de section relativement faible et d'une certaine longueur, afin de freiner et de refroidir le métal. Ceci implique évidemment une complication et un alourdissement du moule, en contradiction avec l'intérêt d'atteindre un faible prix de revient, vu son usage unique. En outre, la section du ou des évents ne peut descendre sous une certaine valeur, fonction du volume interne du moule, sous peine de ralentir de façon inacceptable le remplissage de ce dernier.

L'objet de la présente invention est de fournir une solution à ce problème, à la fois simple, économique et efficace.

A cet effet, l'invention consiste en un évent-obturateur pour dispositif de prise d'échantillon de métal en fusion, dispositif du type comportant un moule présentant un passage d'entrée donnant accès à au moins une chambre communiquant avec l'extérieur du moule, cet évent-obturateur étant constitué par une barrière, logée dans ladite chambre, cette barrière étant conformée pour offrir, d'une part, une pluralité de passages pour l'air lors du remplissage du dispositif par du métal en fusion et, d'autre part, une masse et une surface suffisantes pour garantir le refroidissement jusqu'à solidification du métal atteignant ladite barrière.

Pour plus de clarté, quelques formes de réalisation de l'invention sont décrites ci-après à titre illustratif et non restrictif, référence étant faite aux dessins annexés dans lesquels :

la figure 1 représente, en coupe et écorché partiels,

- 3 -

0004688

un dispositif de prise d'échantillon équipé d'un
évent-obturateur selon l'invention;
la figure 2 est une coupe selon la ligne II-II
de la figure 1;
la figure 3 est une coupe similaire à celle de la

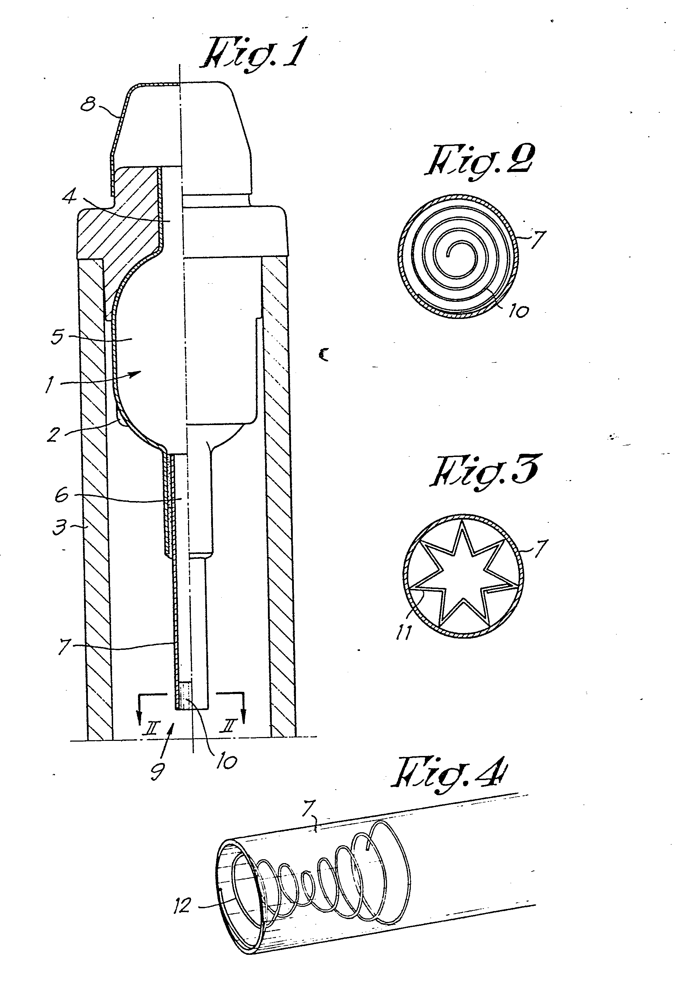

figure 2, d'une variante d'exécution; et
la figure 4 est une vue perspective d'une autre
variante de réalisation.

Le dispositif de prise d'échantillon représenté à la figure 1
est constitué par un moule métallique 1, réalisé en deux coquilles identiques placées face à face et logées dans un support 2 en sable de fonderie. Ce support est inséré dans
l'extrémité d'un tube en carton 3, destiné à être glissé, par
son autre extrémité, sur le bout d'une lance non représentée.

Le moule 1 comporte un passage d'entrée 4 débouchant dans une
chambre 5, laquelle se prolonge, à son tour, par un passage
cylindrique 6 réalisé, en l'occurrence, par un tube en quartz
7 cimenté au moule 1.

Le passage d'entrée 4 est protégé par une coiffe métallique
consumable 8.

Les dispositions susdécrites sont connues et ne font pas, en
tant que telles, partie de l'invention.

Cette dernière concerne l'évent-obturateur désigné en général par la référence 9 à la figure 1.

Dans la première variante de réalisation représentée (figures 1 et 2) cet évent-obturateur est obtenu en insérant,
dans l'extrémité libre du tube 7, une bande d'acier ressort
10 enroulée en spirale, formant barrière.

Les dimensions de la bande 10 sont choisies en fonction du
diamètre intérieur du tube 7 de sorte qu'environ soixante-

- 4 -

0004688

dix pourcent de la surface de la section de ce dernier restent libres. La largeur de la bande 10, par contre, est telle que la surface totale de la bande 10 est environ dix fois plus grande que celle de ladite section. Il s'ensuit que l'air peut librement s'échapper du moule 1 lors de son remplissage suite à son immersion dans le métal en fusion. Par contre, dès que le métal atteint et parcourt la bande 10, il se solidifie et obture le tube 7, empêchant ainsi tout surremplissage du dispositif.

Il est à remarquer que la bande 10 ne nécessite aucune fixation particulière car venant s'appliquer élastiquement contre la paroi interne du tube 7.

Il est évident que de nombreuses variantes d'exécution de l'évent-obturateur 9 peuvent être imaginées.

Ainsi, dans le cas de la figure 3, la barrière est réalisée sous forme d'une bande métallique plissée 11 tandis que, dans l'exemple de la figure 4, elle est constituée par un fil ou bande étroite 12 en spirale bi-conique. On pourrait également réaliser ladite barrière sous forme d'une masse réticulée métallique ou en toute autre matière appropriée.

Dans un autre exemple de réalisation pratique, les dimensions de la bande sont choisies de sorte qu'environ cinquante pourcent de la surface de la section du tube restent libres.

La largeur de la bande est telle que la surface totale de ladite bande est environ cinq fois plus grande que celle de ladite section.

La force de déroulement de la bande est, de préférence, d'environ 1,5 kg, ce qui est largement suffisant pour la maintenir contre la paroi interne du tube.

0004688

Un grand nombre de paramètres peuvent influencer les résultats, à savoir, le type de métal, sa température, la vitesse et la profondeur de l'immersion, la viscosité du métal en fusion, le diamètre du tube, etc.

Quoi qu'il en soit, l'évent-obturateur devra, en toutes circonstances, présenter une masse et une surface suffisamment grandes pour pouvoir garantir le refroidissement jusqu'à solidification du métal en fusion endéans les cinq secondes à partir du moment où le métal en fusion entre en contact avec ledit évent-obturateur.

La bande peut avantageusement être réalisée en acier ressort du type DIN 17222 et présenter une épaisseur d'environ 0,2 mm, une largeur de 5 mm et une longueur totale, à l'état déroulé, d'environ 40 mm.

Pour un diamètre intérieur du tube de 6 mm, la distance radiale entre les spires limitrophes peut varier entre 0,5 mm et 1,5 mm.

L'évent-obturateur susdécrit peut équiper des dispositifs de prise d'échantillon fort différents de celui représenté à la figure 1 annexée.

L'invention s'étend à tout dispositif de prise d'échantillon équipé d'au moins un évent-obturateur tel que décrit.

- 1 -

0004688

Revendications.

1.- Event-obturateur pour dispositif de prise d'échantillon de métal en fusion, dispositif du type comportant un moule présentant un passage d'entrée donnant accès à au moins une chambre communiquant avec l'extérieur du moule, caractérisé en ce qu'il est constitué par une barrière (10), logée dans ladite chambre (7), cette barrière (10) étant conformée pour offrir, d'une part, une pluralité de passages pour l'air lors du remplissage du dispositif par du métal en fusion et, d'autre part, une masse et une surface suffisantes pour garantir le refroidissement jusqu'à solidification du métal atteignant ladite barrière (10).

2.- Event-obturateur selon la revendication 1, caractérisé en ce que ladite barrière (10) est constituée par une bande métallique enroulée en spirale.

3.- Event-obturateur selon la revendication 1, caractérisé en ce qu'il est constitué par une bande plissée (11).

4.- Event-obturateur selon la revendication 1, caractérisé en ce qu'il est constitué par un fil enroulé en spirale biconique (12).

5.- Event-obturateur selon l'une des revendications 2 à 4, caractérisé en ce qu'il est réalisé en acier ressort.

6.- Event-obturateur selon la revendication 1, caractérisé en ce que ladite barrière (10) est constituée par une masse réticulée.

7.- Dispositif de prise d'échantillon de métal en fusion, équipé d'au moins un évent-obturateur selon l'une quelconque des revendications 1 à 6.

1/1

0004688

Fig.1

Fig.2

Fig.3

Fig.4